# EUROPEAN PATENT APPLICATION

(11) **EP 1 237 301 A1**
(43) Date of publication of application: **04.09.2002**
(21) Application number: 01976777.1
(22) Date of filing: 19.10.2001
(51) Int. Cl.: H04B 7/26

(54) **SYSTEM FOR RADIO COMMUNICATIONS TO BE MADE FOR RESPECTIVE PARTICULAR GROUPS**

(30) Priority: 27.10.2000 JP 2000328018
(71) Applicant: Temco Japan Co., Ltd., Tokyo 168-0062 (JP)
(72) Inventor: TAKEDA, Takeshi, c/o TEMCO JAPAN CO., LTD., Tokyo 168-0062 (JP); MASUDA, Tetsuya, c/o TEMCO JAPAN CO., LTD., Tokyo 168-0062 (JP)
(74) Representative: de Roquemaurel, Bruno
(86) International application number: JP0109202
(87) International publication number: WO02035737

(57) **Abstract**

A system is adapted for radiocommunications through which at least a necessary message is addressed to only the members of a predetermined group without fail in a place or facilities where a large number of persons including ones handicapped in sense organ and the members of the group gather closely together. The system comprises: an information receiving terminal, wherein each of the members of the group carries the terminal with his or her for receiving the message or information; an antenna which is installed in the facilities to transmit a signal to the terminal; and, an announcement center for transmitting the information simultaneously to all the members of the group by using the antenna. The terminal is provided with a bone conduction speaker. The terminal is delivered to and returned from each of the members of the group at an entrance and an exit of the facilities, respectively.

## Description

### FIELD OF THE INVENTION

The present invention relates to a system adapted for radiocommunications addressed to only the members of a predetermined group, and more particularly to such a system for sending a predetermined message by wireless to the members of the predetermined group in a place or facilities where a large number of various kinds of persons including the members of the group gather closely together, for example, in a place such as an airport, a major museum of art, a museum of various items and like places.

### BACKGROUND OF THE INVENTION

In a place where a large number of various kinds of persons gather closely together, for example such as an airport and like places, or in a place where quietness is primarily required, for example such as a museum of art and a museum of various items, it is often difficult to send a message to the members of a predetermined group by using a member call through a loudspeaker. Further, even when such a message or information is sent properly, it can't be ensured that the members of the predetermined group properly catch the information without fail.

For example, in the case of the facilities of an airport, an announcement of arrivals and departures of airplane flights from the airport and like important information is made very often in the facilities by using their local area broadcast. However, most of the persons or flight passengers do not notice such an announcement in the facilities.

The reason why they do not notice the announcement is that: although the facilities of the airport are too noisy, it is not possible to make such an announcement at full volume of sound in the facilities; due to this, the announcement tends to be interfered with ambient noises, which causes most of the persons including the member of the group to overlook the announcement; and, since the facilities of the airport is too large in space, which causes both the noises and the announcement to echo round the facilities of the airport together, so that the sound of the announcement is deteriorated in clearness. In addition, most of the contents of the local area broadcast in the facilities of the airport are not addressed to the persons or members of the predetermined group. Due to this, most of the persons often detract their attention from the announcement, which often results in a failure to catch the announcement. Furthermore, in use, the local area broadcast employed in the facilities of the airport is not dedicated to any selected one of individuals or groups, but dedicated to all the persons attending the airport.

As for the persons who are aged and therefore poor in hearing or the persons who are poor in eyesight, it is impossible to properly send a message to them using the local area broadcast of the facilities of the airport through a conventional loudspeaker. Further, in any of the museum of art and the museum of various items, there is not employed any of local area broadcast since the museums primarily require quietness.

Consequently, it is an object of the present invention to provide a system adapted for radiocommunications addressed to only the members of a predetermined group. In a place or facilities where a large number of various kinds of persons including ones handicapped in sense organ and the members of a predetermined group gather closely together, it is possible for the predetermined group to have their members informed of at least an indispensable message without fail by using the system of the present invention.

### SUMMARY OF THE INVENTION

The present invention is characterized by: a system adapted for radiocommunications through which a message is addressed to only the members of a predetermined group in a place or facilities where a large number of various kinds of persons and the members of the group gather closely together, comprising:
an information receiving terminal, wherein each of the members of the predetermined group carries the information receiving terminal with his or her for receiving the message or information;
an antenna which is installed in the facilities to transmit a signal to the information receiving terminal;
an announcement center for transmitting the information to all the members of the predetermined group at a time through the antenna;
the information receiving terminal being provided with a bone conduction speaker, wherein the information receiving terminal is delivered to and returned from each of the members of the predetermined group at an entrance arid an exit of the facilities, respectively.

### BRIEF DESCRIPTION OF THE DRAWING

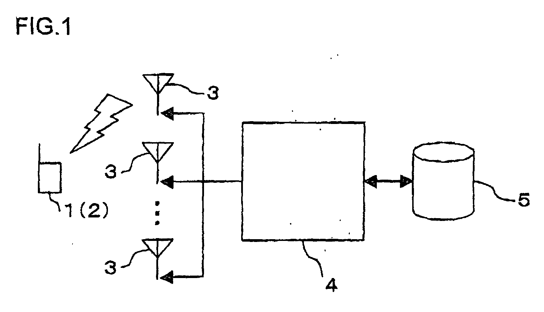

Fig. 1 is a view illustrating the system of the present invention adapted for radiocommunications through which a message is addressed to only the members of a predetermined group.

### BEST MODE FOR CARRYING OUT THE INVENTION

With reference to the accompanying drawings, an embodiment of the present invention will be described. As shown in Fig.1, an information receiving terminal 1 is adapted for receipt of transmitted information in the side of a message receiving person 2. In a place or facilities where an announcement is made, the message receiving person 2 receives a rental one of the information receiving terminals 1 at an entrance of the facilities where a check-in procedure of the person 2 is performed. When the person 2 reaches an exit of the facilities, he or she must return such a rental terminal 1 to the side of the facilities at the exit of the facilities.

Although there are various types of the information receiving terminal 1, a bone conduction speaker is preferred in use relative to an earphone (i.e., acoustic speaker). As for the bone conduction speaker, there is no fear that any person near the bone conduction speaker suffers inconvenience from the speaker. At the same time, the bone conduction speaker is adapted for use in a noisy environment, which enables both the aged person and a person slightly handicapped in hearing to properly catch the transmitted information. Further, in the bone conduction speaker, there is no fear that the person slightly handicapped in hearing has his or her ears closed with earphones. The use of the bone conduction speaker enables the person slightly handicapped in hearing to obtain important information from the outside using his or her own ears. Also from the viewpoint of a sanitary aspect, the bone conduction speaker is preferable in use. It is also possible to combine the bone conduction speaker with a liquid crystal display screen serving as a message display means. In addition, it is also possible to combine any vibrating means with the bone conduction speaker together with the liquid crystal display unit. It is also possible to combine only the vibrating means with the bone conduction speaker.

As described above, by employing the bone conduction speaker, it is possible to produce the information receiving terminal 1 having a fully water-tight construction in an easy manner. As the rental terminals to be rent to a large number of various kinds of persons, it is possible for the information receiving terminal 1 to be sterilized by washing, which ensures the information receiving terminal 1 to be safe in a sanitary point of view.

On the other hand, an antenna 3 is installed in each of a plurality of installation points of the facilities, which enables the information receiving terminal 1 to transmit and receive a signal by wireless.

An announcement center 4 communicates with the information receiving terminal1 through the antenna 3 to transmit the information to the terminal 1.

In an urgent case, an operator in the announcement center 4 may directly transmit a voice message to the information receiving terminal 1 through his or her microphone or like instruments. However in most cases, a formatted message prepared by using a computer is transmitted to the information receiving terminal 1. Incidentally, such transmission of the message to all the members of the group is performed at a time, wherein each of the members of the predetermined group is identified by an ID code, which will be described later in detail.

In this case, the formatted message is stored in a memory unit 5, retrieved therefrom by a signal from the announcement center 4 and delivered to the message receiving person 2. The memory unit 5 is constructed of, for example such as a hard disk unit, a floppy disk unit, a magnet-optical disk unit or the like.

Now, an embodiment of a system of the present invention adapted for radiocommunications through which a message is addressed to only the members of the predetermined group will be described hereinbelow.

As described above, the information receiving terminal 1 is carried about with each of a plurality of the message receiving persons 2. The terminal 1 has its own identification number for distinguish it from others.

Since flight passengers most require the local area broadcast in the facilities of an airport, each of the passengers must receive a rental one of the information receiving terminals 1 at an entrance of the facilities where a check-in procedure of each of the passengers is performed. Since such a rental terminal 1 is rent to each of the flight passengers, it is necessary to identify each of the passengers to whom each of the rental terminals 1 is rent. Consequently, the number of the rental terminal 1 is recorded in the facilities of the airport when the terminal 1 is rent to a corresponding one of the flight passengers.

In general, at a time when the check-in procedure of the passenger is performed, it is necessary to confirm necessary information such as the name of the passenger, the name of an aviation company which the passenger uses, a flight number, a seat number of the flight and like information. These pieces of information of the passenger and the terminal number of the rental terminal 1 are stored to form a data base as to the passenger.

Each of items of the information of the flight passenger 2 is used as an ID code to distinguish the subject passenger 2 from others. For example, when both the name of the aviation company and the flight number are used as the ID code, it is possible to identify any one of the flight passengers having been already subjected to the check-in procedure, with respect to each of the aviation companies and the flight numbers used by these passengers.

The announcement center 4 transmits the necessary information to the terminal which has the terminal number identified by using the ID code. The information to be transmitted is previously stored in the memory unit 5 to form the formatted message. An announcer transmits the message to the flight passengers, which message may include, in addition to the formatted message, an urgent call message to be transmitted to a specified one of the flight passengers. In other words, the flight passenger carrying the information receiving terminal 1 with him or her is capable of receiving only the information or announcement which he or she wants to receive.

Since the subject passenger may listen to what the announcer says by using the bone conduction speaker and like instruments, there is no fear that any person near the subject passenger suffers inconvenience from the bone conduction speaker. This enables a place such as a museum of art, a museum of other items and like places, where any local area broadcast addressed to the members of a predetermined group is heretofore inhibited, to employ such local area broadcast.

### INDUSTRIAL APPLICABILITY

The present invention has the construction described above. Consequently, it is possible for the present invention to transmit the necessary information to the members of the predetermined group without fail in a place or facilities where a large number of various kinds of the persons including the members of the group gather closely together. Furthermore, in the present invention, there is no fear that any person near the members of the group suffers inconvenience from these members, and also no fear that the members of the predetermined group fail to properly understand the transmitted information. Still further, in the present invention, by combining the ID codes it is possible to transmit a predetermined message to all the members or selected ones of the members according to a manner of the combination of the ID codes. Consequently, the present invention is useful in industry.

## Claims

1. A system adapted for radiocommunications through which a message is addressed to only the members of a predetermined group in a place or facilities where a large number of various kinds of persons including said members of said group gather closely together, comprising:
an information receiving terminal, wherein each of said members of said predetermined group carries said information receiving terminal with his or her for receiving said message or information;
an antenna which is installed in said facilities to transmit a signal to said information receiving terminal;
an announcement center for transmitting said information to all said members of said predetermined group at a time through said antenna;
said information receiving terminal being provided with a bone conduction speaker, wherein said information receiving terminal is delivered to and returned from each of said members of said predetermined group at an entrance and an exit of said facilities, respectively.

2. The system as set forth in claim 1, wherein said information is a formatted message having been prepared and stored in said system.

3. The system as set forth in claim 1 or 2, wherein each of said members of said predetermined group has his or her private information treated under his or her ID code in said announcement center.

4. The system as set forth in claim 3, wherein each of said members of said predetermined group is identified by said ID code in said announcement center.

5. The system as set forth in claim 1, wherein said information receiving terminal includes a vibrating means.
